# EUROPÄISCHE PATENTANMELDUNG

(11) **EP 4 131 296 A1**
(43) Veröffentlichungstag der Anmeldung: **08.02.2023**
(21) Anmeldenummer: 22185979.6
(22) Anmeldetag: 20.07.2022
(51) Int. Cl.: H01F 27/28, H01F 30/10, H02M 7/10

(54) **ANORDNUNG ZUR ERZEUGUNG EINER HOCHSPANNUNG**

(30) Priorität: 06.08.2021 DE 102021120473
(71) Anmelder: R&R-Beth GmbH, 07356 Bad Lobenstein (DE)
(72) Erfinder: Friedrich, Heiner, 07356 Bad Lobenstein (DE); Keßler, Jens, 07338 Kaulsdorf (DE)
(74) Vertreter: Engel, Christoph Klaus

(57) **Zusammenfassung**

Die vorliegende Erfindung betrifft eine Anordnung zur Erzeugung einer Hochspannung. Die Anordnung umfasst mindestens einen Magnetkern (02), eine den Magnetkern (02) umgebende Primärwicklung und eine Vielzahl von übereinander gestapelten Leiterplatten (01). Auf den einzelnen Leiterplatten (01) ist jeweils mindestens eine den Magnetkern (02) umgebende Sekundärwicklung (07) in Form einer Leiterbahn ausgebildet, sodass die Primärwicklung mit dem Magnetkern (02) und mit jeder der Sekundärwicklungen (07) jeweils einen Transformator ausbildet. Auf den einzelnen Leiterplatten (01) sind jeweils elektronische Bauelemente zur Gleichrichtung einer von der jeweiligen Sekundärwicklung (07) erzeugbaren Wechselspannung angeordnet, sodass die einzelnen Sekundärwicklungen (07) und die jeweiligen elektronischen Bauelemente jeweils eine Hochspannungsstufe zur Erzeugung einer gleichgerichteten Hochspannung bilden. Die Hochspannungsstufen sind ausgangsseitig elektrisch in Reihe geschaltet. Die Leiterplatten (01) weisen jeweils eine Aussparung (13) auf, in welche zumindest einige der auf der jeweils benachbarten Leiterplatte (01) befindlichen elektronischen Bauelemente hineinragen.

## Beschreibung

Die vorliegende Erfindung betrifft eine Anordnung zur Erzeugung einer Hochspannung in Form einer Gleichspannung. Die Anordnung kann beispielsweise in einem Elektrofilter verwendet werden, mit welchem Partikel aufgeladen, transportiert und abgeschieden werden können.

Die EP 1 211 701 A1 zeigt eine ebene Spule, welche auf einer gedruckten Leiterplatte mit einem Substrat aus elektrisch isolierendem Material ausgebildet ist. Die ebene Spule weist eine erste und eine zweite ebene Wicklung auf, die sich auf gegenüberliegenden Seiten des Substrates befinden und jeweils ein äußeres Ende und ein inneres Ende besitzen. Die Leiterplatte trägt einen ebenen Magnetkern, auf dem sich die erste und zweite Wicklung befinden. Ein metallisiertes Durchgangsloch im Substrat verbindet elektrisch die inneren Enden der ersten und zweiten ebenen Wicklung.

Die DE 199 01 172 C2 zeigt einen Hochspannungstransformator mit einer Vielzahl von geschichteten Grundplatten, die jeweils eine Fläche besitzen, auf der ein erstes Wicklungsmuster und ein zweites Wicklungsmuster separat ausgebildet sind. Ein Magnetkern ragt in einem Durchgangsloch durch die Vielzahl von Grundplatten.

Aus der EP 3 159 902 A1 ist ein Transformator für einen Hochspannungsgeneratorkessel bekannt, welcher eine innere und eine äußere Isolierbuchse sowie eine auf die innere Isolierbuchse gewickelte Wicklung und einen Eisenkern umfasst. Eine Hochspannungswicklung ist auf gestapelten Leiterplatten ausgebildet.

Die DE 690 22 599 T2 lehrt eine Höchstspannungsversorgung mit einem Aufwärtstransformator, der mit dem Eingang eines Spannungsvervielfachers verbunden ist. Kondensatoren des Spannungsvervielfachers jeder Stufe sind durch Bereiche aus leitendem Material gebildet, die an jeder Seite mindestens an eine Schicht aus dielektrischem Material angrenzen. Die Schichten sind als integraler Teil in einem mechanischen Aufbau des Vervielfachers ausgebildet und stützen die Gleichrichterdioden des Vervielfachers. Der Vervielfacher kann als eine Anordnung aus in Kaskade geschalteten Glimmerplatten ausgebildet sein, wobei jede Glimmerplatte eine Vervielfacherstufe aus zwei Kondensatoren und zwei Dioden umfasst.

Aus der DE 195 38 488 C1 ist ein Hochspannungsgenerator für hohe Gleichspannungen bekannt, bei welchem Sekundärwindungen in gedruckter Technik auf Leiterplatten aufgebracht sind. Mehrere dieser Leiterplatten sind parallel zueinander geschichtet und gemeinsam an einer dazu senkrecht angeordneten weiteren Leiterplatte gehaltert. Die die Windungen aufweisenden Leiterplatten sind auf der weiteren Leiterplatte elektrisch in Reihe geschaltet. Die gemeinsame weitere Leiterplatte trägt weitere elektrische Bauelemente, welche mit den Windungen auf der Leiterplatte zusammengeschaltet sind. Auf den Leiterplatten mit den Sekundärwindungen sind weitere hochspannungsseitige Bauelemente aufgebracht und in gedruckter Technik mit den Hochspannungswindungen zusammengeschaltet.

Beispielsweise können Hochspannungsdioden und Hochspannungskondensatoren auf den einzelnen Leiterplatten angeordnet sein. Als Variante kann jede zweite Leiterplatte nur Dioden bzw. Kondensatoren enthalten. Die elektronischen Bauelemente können in SMD-Technik aufgebaut sein. Die Windungen können in Multilayertechnik ausgeführt sein.

Die US 5,166,965 zeigt eine Hochspannungsgleichstromquelle für hohe Leistungen. Diese Hochspannungsgleichstromquelle umfasst eine Magnetflusspolstruktur, die auf eine induktiv gekoppelte Hochfrequenzquelle mit relativ niedriger Spannung anspricht. Mehrere damit induktiv gekoppelte Gleichrichter sind in Reihe geschaltet und gestapelt, um die Ausgangsleistung mit einer hohen Gleichspannung abzuleiten. Jede Stufe enthält ein Paar entgegengesetzt gewickelter planarer Spulen auf gegenüberliegenden Seiten einer gedruckten Schaltungsplatine. Die gedruckten Schaltungen der verschiedenen Stufen werden gegeneinander verschoben und über eine Spule von der Hochfrequenzquelle angesteuert.

Die EP 3 876 683 A1 zeigt einen Wärmeabführungsmechanismus für stapelbasierte elektronische Geräte, welche beispielweise einen Stapel an Leiterplatten umfassen.

Aus der US 2020/0335255 A1 ist eine Leistungsumwandlungsschaltung mit einem Mehrschichttransformator und mehreren Gleichrichtertransistoren bekannt, welche mit Sekundärwicklungen des Mehrschichttransformators gekoppelt sind. Der Mehrschichttransformator ist durch mehrere Schichten innerhalb eines Leitplattenstapels gebildet, wobei Primärwicklungsleiter und Sekundärwicklungsleiter vertikal ausgerichtet und gestapelt sind.

Die US 10,381,914 B2 zeigt eine Vorrichtung mit einem integrierten Transformator. Die Vorrichtung umfasst ein Leistungsumwandlungssystem mit primärseitigen Transistoren und eine Reihenschaltung aus einer Transformatorprimärwicklung, einem Kondensator und einer Induktivität.

Die US 2018/0152108 A zeigt eine Leistungsumwandlungsvorrichtung, die eine Eingangseinheit, eine Umwandlungseinheit zum Umwandeln einer Eingangsgleichspannung in eine Mehrphasenwechselspannung, eine Resonanzeinheit mit einer einzelnen Resonanzinduktivität und eine Ausgangseinheit zur Gleichrichtung der Mehrphasenwechselspannung umfasst.

Die GB 2517015 A zeigt einen planaren Rücklauftransformator mit einem Kern aus einem magnetischen Material und mit mehreren Leiterplatten. Leiterbahnen auf den Leiterplatten bilden mindestens eine Primärspule und eine Sekundärspule, die jeweils spiralförmig um einen Abschnitt des Kerns verlaufen.

Aus dem Stand der Technik sind netzfrequente Hochspannungstransformatoren mit Gleichrichtung bekannt, welche durch eine spezielle Wickeltechnik und Ölfüllung groß, schwer und teuer sind. Der Einsatz von Schaltnetzeiltechnologien im Hochspannungsbereich scheitert nicht nur an der fehlenden Verfügbarkeit geeigneter spannungsfester Halbleiter sondern auch daran, dass parasitäre Effekte durch die unvermeidlichen Wickelkapazitäten mit dem Quadrat der Spannung und linear mit der Frequenz steigen.

Die Aufgabe der vorliegenden Erfindung besteht ausgehend vom Stand der Technik darin, eine vergleichsweise kleine und wenig aufwändige Anordnung zur Erzeugung einer Hochspannung in Form einer Gleichspannung zur Verfügung zu stellen, welche eingangsseitig eine relativ geringe Wechselspannung benötigt.

Die genannte Aufgabe wird gelöst durch eine Anordnung gemäß dem beigefügten Anspruch 1.

Die erfindungsgemäße Anordnung dient zur Erzeugung einer Hochspannung in Form einer Gleichspannung bzw. einer pulsierenden Gleichspannung. Die Anordnung dient insbesondere zur Wandlung einer Wechselspannung in eine mehrfach größere Gleichspannung im Hochspannungsbereich. Die Anordnung bildet bevorzugt eine Komponente eines Elektrofilters, welches zur Aufladung, zum Transport und/oder zur Abscheidung von Partikeln, wie Staubpartikel ausgebildet ist. Dieses Elektrofilter umfasst bevorzugt weiterhin einen Generator zur Erzeugung der Wechselspannung, welche von der Anordnung in eine mehrfach größere Gleichspannung im Hochspannungsbereich gewandelt wird.

Die Anordnung ist bevorzugt zur Erzeugung einer Hochspannung ausgebildet, welche in einem Bereich von 10 kV bis 100 kV liegt. Die von der Anordnung abgebbare Leistung der Hochspannung liegt bevorzugt im Bereich von 1 kW bis 10 kW. Die Anordnung ist bevorzugt für eine Speisung durch eine Wechselspannung ausgebildet, welche in einem Bereich von 100 V bis 1.000 V liegt. Die Anordnung ist bevorzugt für eine Speisung durch eine Wechselspannung ausgebildet, welche eine Frequenz in einem Bereich von 20 kHz bis 200 kHz aufweist.

Die Anordnung umfasst mindestens einen Magnetkern für einen Transformator. Der Magnetkern kann auch als Eisenkern oder Ferritkern bezeichnet werden und besteht aus einem weichmagnetischen Werkstoff, wie beispielsweise eine ferromagnetische Metalllegierung oder ein Ferrit.

Die Anordnung umfasst weiterhin mindestens eine den Magnetkern umgebende Primärwicklung. Die Primärwicklung ist um den Magnetkern gewunden bzw. gewickelt. Die Primärwicklung bildet einen Eingang für die die Anordnung speisende Wechselspannung.

Die Anordnung umfasst weiterhin eine Vielzahl von übereinander gestapelten Leiterplatten. Die Leiterplatten können auch als Leiterkarten, Platinen oder gedruckte Schaltungen bezeichnet werden. Die übereinander gestapelten Leiterplatten bilden einen Stapel. Auf den einzelnen Leiterplatten ist jeweils mindestens eine den Magnetkern umgebende Sekundärwicklung in Form einer Leiterbahn ausgebildet. Die Leiterbahnen bestehen bevorzugt aus Kupfer und sind bevorzugt als eine dünne Schicht auf einem elektrisch isolierenden Substrat der jeweiligen Leiterplatte ausgebildet. Eine Dicke dieser Schicht beträgt bevorzugt weniger als 100 µm. Die Sekundärwicklungen sind um den Magnetkern gewunden. Somit bildet die mindestens eine Primärwicklung mit dem Magnetkern und mit jeder der Sekundärwicklungen jeweils einen Transformator aus. Der Stapel kann neben den die Sekundärwicklungen tragenden Leiterplatten weitere Leiterplatten umfassen, beispielsweise Leiterplatten, auf denen die Primärwicklung ausgebildet ist und/oder Leiterplatten zur Hochspannungsführung.

Auf den einzelnen Leiterplatten sind jeweils elektronische Bauelemente zur Gleichrichtung einer von der jeweiligen Sekundärwicklung erzeugbaren Wechselspannung angeordnet. Insofern die jeweilige Leiterkarte mehrere der Sekundärwicklungen trägt, können die elektronischen Bauelemente zur Gleichrichtung mehrfach auf der jeweiligen Leiterkarte vorhanden sein. Die einzelnen Sekundärwicklungen und die jeweiligen elektronische Bauelemente zur Gleichrichtung bilden jeweils eine Hochspannungsstufe zur Erzeugung einer gleichgerichteten Hochspannung. Die Hochspannungsstufen sind bevorzugt zur Erzeugung einer gleichgerichteten Hochspannung in einem Bereich zwischen 1 kV und 10 kV ausgebildet.

Die Hochspannungsstufen sind ausgangsseitig elektrisch in Reihe geschaltet, sodass sich die von den einzelnen Hochspannungsstufen erzeugbaren Hochspannungen addieren, wobei die Summe der einzelnen Hochspannungen die von der Anordnung zu erzeugende Hochspannung darstellt.

Die einzelnen Leiterplatten weisen jeweils mindestens eine Aussparung auf, in welche zumindest einige der auf der jeweils benachbarten Leiterplatte befindlichen elektronischen Bauelemente hineinragen. Somit können die Leiterplatten ohne einen Abstand zueinander übereinander gestapelt werden, sodass sich lediglich ein Klebstoff und/oder ein Isolationsmaterial oder dergleichen zwischen den Leiterplatten befindet. Bevorzugt ragen alle die auf der benachbarten Leiterplatte befindlichen elektronischen Bauelemente in die Aussparung hinein. Die Aussparungen sind bevorzugt jeweils in einem Randbereich der jeweiligen Leiterplatte ausgebildet.

Ein Vorteil der erfindungsgemäßen Anordnung besteht darin, dass die die Anordnung speisende Wechselspannung möglichst klein gehalten werden kann und sich die zu erzeugende Gleichspannung vergleichsweise aufwandsarm durch Vervielfachung ergibt. Die erfindungsgemäße Anordnung kann auch als Splitt-Transformator bezeichnet werden. Ein weiterer Vorteil der Anordnung besteht darin, dass sie kompakt ausgeführt werden kann und dass durch eine geeignete Wahl der Materialen der Komponenten der Anordnung und weiterer Maßnahmen zur Feldsteuerung die auftretenden hohen Feldstärken beherrscht werden können und so Teilentladungen vermieden werden.

Bei bevorzugten Ausführungsformen sind die Leiterplatten ohne einen freien Zwischenraum zwischen den Leiterplatten übereinander gestapelt angeordnet. Zwischen den Leiterplatten befinden sich lediglich Klebstoff und/oder ein Isolationsmaterial oder dergleichen, sodass die Leiterplatten einen geschlossenen, kompakten Stapel bilden. Beispielsweise werden die Leiterplatten in einem Vakuumverguss-Verfahren miteinander verbunden bzw. verklebt. Die benachbarten der Leiterplatten weisen jeweils einen Abstand zwischen ihren Oberflächen auf, welcher kleiner als eine Höhe der elektronischen Bauelemente ist, da die Leiterplatten jeweils die Aussparung aufweisen, in welche die auf der jeweils benachbarten Leiterplatte befindlichen elektronischen Bauelemente hineinragen. Der genannte Abstand zwischen den Oberflächen jeweils zweier benachbarter der Leiterplatten ist bevorzugt gleich Null oder er ist bevorzugt mit einem Klebstoff und/oder einem Isolationsmaterial gefüllt. Der genannte Abstand zwischen den Oberflächen jeweils zweier benachbarter der Leiterplatten ist bevorzugt kleiner als 1 mm und weiter bevorzugt kleiner als 0,1 mm.

Die einzelnen Leiterplatten weisen bevorzugt jeweils einen Bestückungsbereich auf, in welchem zumindest die Mehrzahl der elektronischen Bauelemente der jeweiligen Leiterplatte angeordnet ist. Bevorzugt wechseln sich in einer Folge der übereinander gestapelten Leiterplatten die Bestückungsbereiche und die Aussparungen ab. Die Bestückungsbereiche und somit auch die Aussparungen sind bevorzugt auf den Leiterkarten jeweils in einem Abschnitt angeordnet, welcher von der mindestens einen Sekundärwicklung beabstandet ist.

Die Leiterplatten weisen bevorzugt jeweils eine Durchgangsöffnung auf, durch welche der Magnetkern hindurchgeführt ist und welche von der jeweiligen mindestens einen Sekundärwicklung umschlossen ist. Die Durchgangsöffnungen sind bevorzugt fluchtend übereinander angeordnet. Die Durchgangsöffnungen sind bevorzugt rechteckförmig mit bevorzugt abgerundeten Ecken.

Der mindestens eine Magnetkern weist bevorzugt eine U-Form mit zwei Schenkeln auf. Einer der Schenkel der U-Form ist durch die Durchgangsöffnungen hindurchgeführt, während ein anderer der Schenkel der U-Form neben den übereinander gestapelten Leiterplatten angeordnet ist. Die beiden Schenkel der U-Form sind bevorzugt senkrecht zu den Leiterplatten angeordnet. Die Anordnung umfasst bevorzugt zwei der U-förmigen Magnetkerne, die gemeinsam durch die Durchgangsöffnungen hindurchgeführt sind.

Bei bevorzugten Ausführungsformen sind die Leiterplatten jeweils mehrlagig ausgeführt. Die einzelnen Leiterplatten weisen bevorzugt zwischen zwei und sechs Lagen auf. Die mindestens eine Sekundärwicklung ist bevorzugt auf einer inneren der mehreren Lagen der jeweiligen Leiterplatte ausgebildet.

Die einzelnen Leiterplatten weisen eine Dicke auf, welche bevorzugt mindestens 1,5 mm und weiter bevorzugt mindestens 2 mm beträgt. Die Dicke der jeweiligen Leiterplatte gleicht der Höhe der Aussparung, in welche die elektronischen Bauelemente der benachbarten Leiterplatte hineinragen.

Die Anzahl der die Sekundärwicklungen tragenden Leiterplatten beträgt bevorzugt zwischen 5 und 50. Die Anzahl der Sekundärwicklungen der Anordnung beträgt bevorzugt zwischen 10 und 100.

Bei einer Ausführungsform umfassen die auf jeweils einer der Leiterplatten angeordneten elektronischen Bauelemente mindestens eine Diode zur Gleichrichtung der in der mindestens einen Sekundärwicklung induzierbaren Wechselspannung. In dieser Ausführungsform ist die mindestens eine auf der jeweiligen der Leiterplatten angeordnete Diode in einer Einwegschaltung verschaltet. Vorzugsweise sind die mehreren auf der jeweiligen der Leiterplatten angeordneten Dioden als eine Graetz-Brücke, als eine Greinacher-Schaltung oder als eine Delon-Schaltung verschaltet.

Bei bevorzugten Ausführungsformen umfassen die auf jeweils einer der Leiterplatten angeordneten elektronischen Bauelemente mindestens einen Kondensator. Der mindestens eine auf der jeweiligen der Leiterplatten angeordnete Kondensator ist bevorzugt als ein Glättungskondensator zur Glättung der gleichgerichteten Spannung verschaltet.

Bei bevorzugten Ausführungsformen umfassen die auf jeweils einer der Leiterplatten angeordneten elektronischen Bauelemente weiterhin Teilerwiderstände zur Teilung einer Ausgangsspannung. Die Teilung der Ausgangsspannung erleichtert die Messung der Ausgangsspannung an einem Fußpunkt.

Bei bevorzugten Ausführungsformen umfassen die auf jeweils einer der Leiterplatten angeordneten elektronischen Bauelemente mindestens einen Sicherungswiderstand, welcher zwischen der jeweiligen Sekundärwicklung und der jeweiligen Gleichrichterschaltung verschaltet ist. Der Sicherungswiderstand öffnet im Falle eines Kurzschlusses, welcher beispielsweise bei einem Defekt durch eine der jeweiligen Dioden verursacht werden kann.

Bei bevorzugten Ausführungsformen umfassen die auf jeweils einer der Leiterplatten angeordneten elektronischen Bauelemente mindestens eine LED zur Funktionskontrolle, sodass im Betrieb von außen sichtbar ist, ob die Hochspannungsstufe funktionstüchtig ist.

Bei bevorzugten Ausführungsformen sind die auf den Leiterplatten angeordneten elektronischen Bauelemente als SMD-Bauelemente ausgeführt. Die SMD-Bauelemente weisen eine Höhe auf, welche bevorzugt höchstens 2 mm und weiter bevorzugt höchstens 1,4 mm beträgt. Da die Leiterplatten bevorzugt mindestens 2 mm dick sind, können die SMD-Bauelemente vollständig in den Aussparungen angeordnet werden.

Bei bevorzugten Ausführungsformen weisen die einzelnen Leiterplatten jeweils mindestens vier der Sekundärwicklungen auf. Die mindestens vier Sekundärwicklungen sind bevorzugt über die mehreren Lagen der jeweiligen mehrlagigen Leiterplatte verteilt angeordnet, bevorzugt auf den inneren Lagen der jeweiligen Leiterplatte.

Die flachen Sekundärwicklungen weisen bevorzugt eine runde oder eine ovale Form auf. Die Sekundärwicklungen weisen jeweils eine äußere Windung auf, die einen minimalen Krümmungsradius besitzt, welcher bevorzugt mindestens 30 mm beträgt.

Bei bevorzugten Ausführungsformen weisen die einzelnen Leiterplatten jeweils einen inneren Leiterzug in Form einer Leiterbahn auf, welcher in einem Inneren der jeweiligen mindestens einen Sekundärwicklung angeordnet ist und die jeweilige Durchgangsöffnung bis auf eine Unterbrechung umschließt. Der innere Leiterzug weist bevorzugt das gleiche elektrische Potenzial wie der Magnetkern auf, welches bevorzugt durch ein Potenzial eines Schutzleiters gebildet ist, d. h., dass der innere Leiterzug bevorzugt mit dem Schutzleiter elektrisch verbunden ist. Durch den auf der jeweiligen Leiterplatte angeordneten inneren Leiterzug wird bewirkt, dass hohe elektrische Feldstärken nur in einem Bereich zwischen dem inneren Leiterzug und der mindestens einen Sekundärwicklung auf der jeweiligen Leiterplatte auftreten. Am Magnetkern können so kaum elektrische Feldstärken auftreten, wodurch Coronaentladungen vermieden werden. Der innere Leiterzug weist einen minimalen Krümmungsradius auf, welcher bevorzugt mindestens 15 mm beträgt.

Bei bevorzugten Ausführungsformen weisen die einzelnen Leiterplatten jeweils mindestens einen äußeren Leiterzug auf, welcher außerhalb der jeweiligen mindestens einen Sekundärwicklung angeordnet ist; insbesondere an einem äußeren Rand der jeweiligen Leiterplatte. Der mindestens eine äußere Leiterzug weist bevorzugt das gleiche elektrische Potenzial wie der Magnetkern auf, welches bevorzugt durch ein Potenzial eines Schutzleiters gebildet ist, d. h., dass der mindestens eine äußere Leiterzug bevorzugt mit dem Schutzleiter elektrisch verbunden ist. Der mindestens eine äußere Leiterzug ist nicht als geschlossene Windung ausgeführt und weist daher bevorzugt Unterbrechungen auf. Der mindestens eine äußere Leiterzug ist bevorzugt zwischen der jeweiligen mindestens einen Sekundärwicklung und dem zweiten Schenkel des mindestens einen U-förmigen Magnetkernes angeordnet. Weitere der äußeren Leiterzüge sind bevorzugt jeweils als eine äußere Begrenzung des jeweiligen Bestückungsbereiches und/oder der jeweiligen Aussparung ausgebildet.

Die inneren Leiterzüge und/oder die äußeren Leiterzüge sind bevorzugt jeweils als eine primäre Hilfswicklung ausgebildet.

Die Leiterplatten und die darauf befindlichen Sekundärwicklungen mit gegebenenfalls den inneren und/oder äußeren Leiterzügen sind bevorzugt so ausgeführt, dass ein im Betrieb auftretendes Potenzial von einem äußeren Rand der jeweiligen Leiterplatte zu einem Mittelpunkt der jeweiligen Leiterplatte ansteigt.

Bei bevorzugten Ausführungsformen weisen die Leiterplatten bevorzugt eine gleiche äußere Form auf. Die äußere Form ist bevorzugt durch ein Rechteck gebildet. Die Leiterplatten weisen bevorzugt abgerundete Ecken auf. Die Leiterplatten sind bevorzugt fluchtend übereinander angeordnet.

Bei bevorzugten Ausführungsformen umfasst die Vielzahl der Leiterplatten eine erste Gruppe gleicher Leiterplatten und eine zweite Gruppe gleicher Leiterplatten. Die Leiterplatten der beiden Gruppen unterscheiden sich bevorzugt lediglich in der wechselseitigen Anordnung des Bestückungsbereiches und der Aussparung. Es sind abwechselnd eine der Leiterplatten der ersten Gruppe und eine der Leiterplatten der zweiten Gruppe übereinander angeordnet.

Bevorzugte Ausführungsformen der Anordnung umfassen weiterhin mindestens eine Primärleiterplatte, auf welcher die mindestens eine Primärwicklung in Form einer Leiterbahn ausgebildet ist. Die mindestens eine Primärleiterplatte und die Vielzahl der die Sekundärwicklungen tragenden Leiterplatten sind übereinander gestapelt angeordnet. Die mindestens eine Primärleiterplatte und die Vielzahl der die Sekundärwicklungen tragenden Leiterplatten bilden somit gemeinsam einen Stapel. Die mindestens eine Primärleiterplatte weist bevorzugt die gleiche äußere Form wie die die Sekundärwicklungen tragenden Leiterplatten auf. Die mindestens eine Primärleiterplatte weist bevorzugt in gleicher Weise wie die die Sekundärwicklungen tragenden Leiterplatten eine Durchgangsöffnung auf, durch welche der mindestens eine Magnetkern hindurchgeführt ist und welche von der jeweiligen Primärwicklung umschlossen ist.

Auf der mindestens einen Primärleiterplatte sind bevorzugt weiterhin elektronische Bauelemente zur Steuerung und/oder Messung angeordnet.

Die Vielzahl der die Sekundärwicklungen tragenden Leiterplatten und bevorzugt auch die mindestens eine Primärleiterplatte sind vorzugsweise vergossen oder/und getränkt, was bevorzugt unter einem technischen Vakuum erfolgt ist. Die Vielzahl der die Sekundärwicklungen tragenden Leiterplatten und die mindestens eine Primärleiterplatte sind bevorzugt nicht gemeinsam mit dem Magnetkern vergossen bzw. getränkt.

Bei bevorzugten Ausführungsformen sind die die Sekundärwicklungen tragenden Leiterplatten durch Drahtbrücken, Federkontakte, Lötverbindungen und/oder leitfähige Klebeverbindungen elektrisch miteinander verbunden, um die Hochspannungsstufen ausgangsseitig elektrisch in Reihe zu schalten.

Die Leiterplatten der in einer Reihenschaltung geschalteten Hochspannungsstufen sind bevorzugt so in dem Stapel angeordnet, dass die durch die Reihenschaltung stufenweise steigende Hochspannung beiderseits von einer Oberseite und einer Unterseite des Stapels in Richtung einer Mitte des Stapels steigt, sodass in der Mitte des Stapels das höchste Potential der Reihenschaltung anliegt, wo die zu erzeugende Hochspannung abgegriffen wird. Hinsichtlich der Reihenschaltung ist die Anordnung der Hochspannungsstufen in Bezug auf die Mitte des Stapels symmetrisch.

Weitere Einzelheiten und Weiterbildungen der Erfindung ergeben sich aus der nachfolgenden Beschreibung einer bevorzugten Ausführungsform der Erfindung, unter Bezugnahme auf die Zeichnung. Es zeigen:
- Fig. 1:: eine Schnittansicht einer bevorzugten Ausführungsform einer erfindungsgemäßen Anordnung; und
- Fig. 2:: einen Schaltplan von elektrischen Komponenten der in Fig. 1 gezeigten Anordnung.

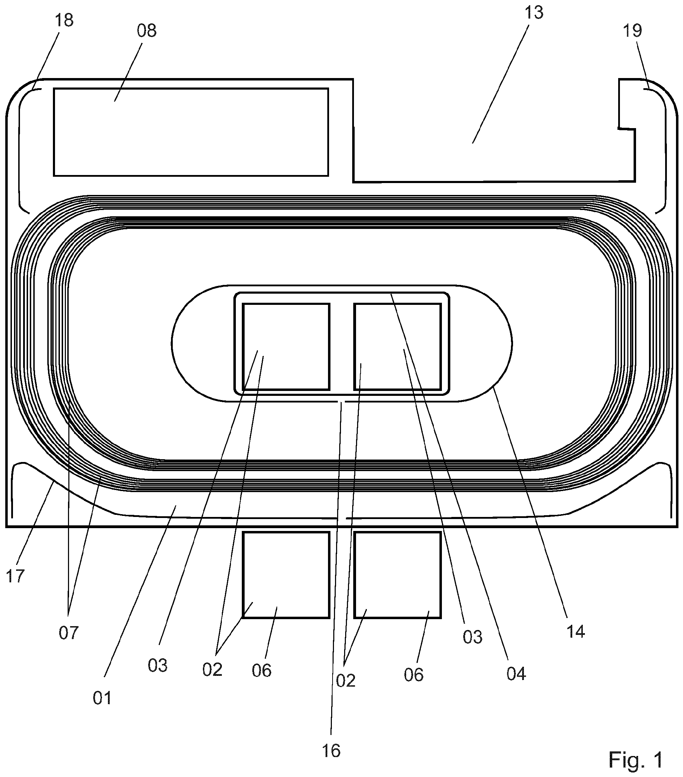

Fig. 1 zeigt eine Schnittansicht einer bevorzugten Ausführungsform einer erfindungsgemäßen Anordnung zur Erzeugung einer Hochspannung. Die Schnittansicht zeigt insbesondere eine Leiterplatte 01, welche gemeinsam mit mehreren weiteren gestapelten Leiterplatten (nicht dargestellt) als ein Stapel auf zwei Magnetkernen 02 sitzt.

Die Magnetkerne 02 weisen jeweils eine U-Form auf, wobei jeweils ein Schenkel 03 der U-förmigen Magnetkerne 02 durch eine in der Leiterplatte 01 ausgebildete Durchgangsöffnung 04 hindurchgeführt ist, während jeweils ein anderer Schenkel 06 der U-förmigen Magnetkerne 02 außerhalb der Leiterplatte 01 geführt ist.

Die Leiterplatte 01 ist mehrlagig ausgeführt, wobei auf zwei inneren Lagen jeweils zwei Sekundärwicklungen 07 als Leiterbahnen ausgebildet sind. Eine den Schenkel 03 umgebende Primärwicklung (nicht dargestellt) der Anordnung bildet mit den Magnetkernen 02 und den einzelnen Sekundärwicklungen 07 jeweils einen Transformator aus.

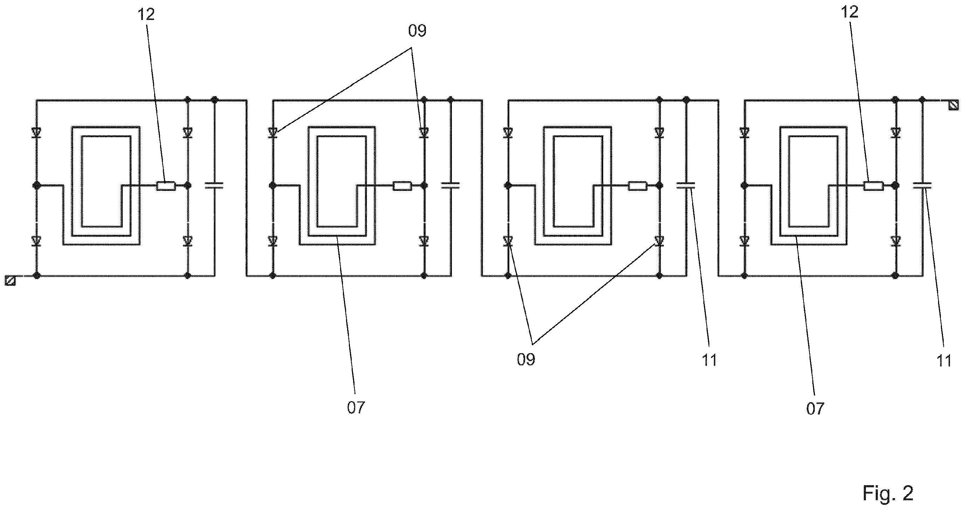

Die Leiterplatte 01 weist einen Bestückungsbereich 08 auf, in welchem elektronische Bauelemente, wie Dioden 09 (gezeigt in Fig. 2), Kondensatoren 11 (gezeigt in Fig. 2) und Sicherungswiderstände 12 (gezeigt in Fig. 2) angeordnet sind. Die Leiterplatte 01 weist zudem eine Aussparung 13 auf, in welche die elektronische Bauelemente 09, 11, 12 (gezeigt in Fig. 2) einer benachbarten Leiterplatte (nicht gezeigt) des Stapels hineinragen.

Auf der Leiterplatte 01 ist weiterhin ein innerer Leiterzug 14 als Leiterbahn ausgebildet, welcher die Durchgangsöffnung 04 im Inneren der Sekundärwicklungen 07 umgibt und durch eine Unterbrechung 16 unterbrochen ist. Auf der Leiterplatte 01 sind weiterhin ein unterbrochener erster äußerer Leiterzug 17, ein zweiter äußerer Leiterzug 18 und ein dritter äußerer Leiterzug 19 als Leiterbahnen in Randbereichen der Leiterplatte 01 ausgebildet.

Jede der Sekundärwicklungen 07 bildet mit den zugehörigen elektronischen Bauelementen 09, 11, 12 (gezeigt in Fig. 2) eine Hochspannungsstufe, welche zur Erzeugung einer Gleichspannung von beispielhaft 1 kV konfiguriert ist, sodass pro Leiterplatte 01 jeweils eine Gleichspannung in Höhe von 4 kV erzeugbar ist. Die Anordnung umfasst beispielhaft insgesamt 15 der Leiterplatten 01, sodass insgesamt eine Gleichspannung in Höhe von 60 kV erzeugbar ist, wobei die Leistung beispielhaft 3 kW beträgt. Da die von den einzelnen Hochspannungsstufen zu erzeugende Gleichspannung lediglich 1 kV beträgt, kann auf bewährte und preiswerte Komponenten zurückgegriffen werden.

Fig. 2 zeigt einen Schaltplan von elektrischen Komponenten der in Fig. 1 gezeigten Anordnung. Bei den elektrischen Komponenten handelt es sich um die Sekundärwicklungen 07, die Dioden 09, die Kondensatoren 11 und die Sicherungswiderstände 12, wobei die auf einer der Leiterplatten 01 (gezeigt in Fig. 1) gezeigten vier Hochspannungsstufen dargestellt sind. Jeweils vier der Dioden 09 sind als Graetz-Brücke zur Gleichrichtung der in den einzelnen Sekundärwicklungen 07 erzeugten Wechselspannung verschaltet. An den Ausgängen der Graetz-Brücken ist jeweils einer der Kondensatoren 11 als Glättungskondensator angeordnet. Zwischen die einzelnen Sekundärwicklungen 07 und die jeweiligen Dioden 09 ist jeweils einer der Sicherungswiderstände 12 zum Öffnen eines möglichen Kurzschlusses geschaltet. Die Hochspannungsstufen sind in Reihe geschaltet.

### Bezugszeichenliste

- 01: Leiterplatte
- 02: Magnetkern
- 03: Schenkel
- 04: Durchgangsöffnung
- 05: -
- 06: Schenkel
- 07: Sekundärwicklung
- 08: Bestückungsbereich
- 09: Diode
- 10: -
- 11: Kondensator
- 12: Sicherheitswiderstand
- 13: Aussparung
- 14: innerer Leiterzug
- 15: -
- 16: Unterbrechung
- 17: erster äußerer Leiterzug
- 18: zweiter äußerer Leiterzug
- 19: dritter äußerer Leiterzug

## Patentansprüche

1. Anordnung zur Erzeugung einer Hochspannung; umfassend mindestens einen Magnetkern (02), eine den Magnetkern (02) umgebende Primärwicklung und eine Vielzahl von übereinander gestapelten Leiterplatten (01); wobei auf den einzelnen Leiterplatten (01) jeweils mindestens eine den Magnetkern (02) umgebende Sekundärwicklung (07) in Form einer Leiterbahn ausgebildet ist, sodass die Primärwicklung mit dem Magnetkern (02) und mit jeder der Sekundärwicklungen (07) jeweils einen Transformator ausbildet; wobei die Leiterplatten (01) jeweils eine Durchgangsöffnung (04) aufweisen, durch welche der mindestens eine Magnetkern (02) hindurchgeführt ist und welche von der jeweiligen mindestens einen Sekundärwicklung (07) umschlossen ist; wobei auf den einzelnen Leiterplatten (01) jeweils elektronische Bauelemente (09, 11, 12) zur Gleichrichtung einer von der jeweiligen Sekundärwicklung (07) erzeugbaren Wechselspannung angeordnet sind, sodass die einzelnen Sekundärwicklungen (07) und die jeweiligen elektronischen Bauelemente (09, 11, 12) jeweils eine Hochspannungsstufe zur Erzeugung einer gleichgerichteten Hochspannung bilden; und wobei die Hochspannungsstufen ausgangsseitig elektrisch in Reihe geschaltet sind; **dadurch gekennzeichnet, dass** die Leiterplatten (01) jeweils eine Aussparung (13) aufweisen, in welche zumindest einige der auf der jeweils benachbarten Leiterplatte (01) befindlichen elektronischen Bauelemente (09, 11, 12) hineinragen; wobei die Leiterplatten (01) jeweils einen inneren Leiterzug (14) aufweisen, welcher in einem Inneren der jeweiligen mindestens einen Sekundärwicklung (07) angeordnet ist und die jeweilige Durchgangsöffnung (04) bis auf eine Unterbrechung (16) umschließt.

2. Anordnung nach Anspruch 1, **dadurch gekennzeichnet, dass** benachbarte der Leiterplatten (01) jeweils einen Abstand zwischen ihren Oberflächen aufweisen, welcher kleiner als eine Höhe der elektronischen Bauelemente (09, 11, 12) ist.

3. Anordnung nach Anspruch 2, **dadurch gekennzeichnet, dass** der Abstand zwischen den Oberflächen jeweils zweier benachbarter der Leiterplatten (01) kleiner als 1 mm ist.

4. Anordnung nach einem der Ansprüche 1 bis 3, **dadurch gekennzeichnet, dass** die Leiterplatten (01) jeweils einen Bestückungsbereich (08) aufweisen, in welchem zumindest die Mehrzahl der elektronischen Bauelemente (09, 11, 12) der jeweiligen Leiterplatte (01) angeordnet ist, wobei sich in einer Folge der übereinander gestapelten Leiterplatten (01) die Bestückungsbereiche (08) und die Aussparungen (13) abwechseln.

5. Anordnung nach einem der Ansprüche 1 bis 4, **dadurch gekennzeichnet, dass** der mindestens eine Magnetkern (02) eine U-Form mit zwei Schenkeln (03, 06) aufweist, wobei einer der Schenkel (03) der U-Form durch die Durchgangsöffnungen (04) hindurchgeführt ist, und wobei ein anderer der Schenkel (06) der U-Form neben den übereinander gestapelten Leiterplatten (01) angeordnet ist.

6. Anordnung nach einem der Ansprüche 1 bis 5, **dadurch gekennzeichnet, dass** die Leiterplatten (01) jeweils mehrlagig ausgeführt sind, wobei die einzelnen Leiterplatten (01) jeweils mindestens vier der Sekundärwicklungen (07) aufweisen, die über mehrere Lagen der jeweiligen Leiterplatte (01) verteilt sind.

7. Anordnung nach einem der Ansprüche 1 bis 6, **dadurch gekennzeichnet, dass** eine Anzahl der die Sekundärwicklungen (07) tragenden Leiterplatten (01) zwischen 5 und 50 beträgt.

8. Anordnung nach einem der Ansprüche 1 bis 7, **dadurch gekennzeichnet, dass** die auf jeweils einer der Leiterplatten (01) angeordneten elektronischen Bauelemente mindestens eine Diode (09) umfassen, wobei die jeweiligen Dioden (09) in einer Einwegschaltung, in einer Graetz-Brücke, in einer Greinacher-Schaltung oder in einer Delon-Schaltung verschaltet sind.

9. Anordnung nach einem der Ansprüche 1 bis 8, **dadurch gekennzeichnet, dass** die elektronischen Bauelemente (09, 11, 12) als SMD-Bauelemente ausgeführt sind.

10. Anordnung nach einem der Ansprüche 1 bis 9, **dadurch gekennzeichnet, dass** die inneren Leiterzüge (14) das gleiche elektrische Potenzial wie der Magnetkern (02) aufweisen.

11. Anordnung nach einem der Ansprüche 1 bis 10, **dadurch gekennzeichnet, dass** sie weiterhin mindestens eine Primärleiterplatte umfasst, auf welcher die Primärwicklung in Form einer Leiterbahn ausgebildet ist, wobei die Primärleiterplatte und die Vielzahl der die Sekundärwicklungen (07) tragenden Leiterplatten (01) übereinander gestapelt angeordnet sind.

12. Anordnung nach einem der Ansprüche 1 bis 11, **dadurch gekennzeichnet, dass** die Aussparungen (13) jeweils in einem Randbereich der jeweiligen Leiterplatte (01) ausgebildet sind.

13. Anordnung nach einem der Ansprüche 1 bis 12, **dadurch gekennzeichnet, dass** die Sekundärwicklungen (07) jeweils eine äußere Windung aufweisen, die einen minimalen Krümmungsradius besitzt, welcher mindestens 30 mm beträgt.

14. Anordnung nach einem der Ansprüche 1 bis 13, **dadurch gekennzeichnet, dass** die Leiterplatten (01) jeweils mindestens einen äußeren Leiterzug (17, 18, 19) aufweisen, welcher außerhalb der jeweiligen mindestens einen Sekundärwicklung (07) angeordnet ist.

15. Anordnung nach einem der Ansprüche 1 bis 14, **dadurch gekennzeichnet, dass** die inneren Leiterzüge (14) und/oder die äußeren Leiterzüge (17, 18, 19) jeweils als eine primäre Hilfswicklung ausgebildet sind.
